# EUROPÄISCHE PATENTSCHRIFT

(11) **EP 1 737 711 B1**
(45) Veröffentlichungstag und Bekanntmachung des Hinweises auf die Patenterteilung: **23.12.2009**
(21) Anmeldenummer: 05743345.0
(22) Anmeldetag: 19.04.2005
(51) Int. Cl.: B60R 22/195

(54) **SEILSTRAFFER MIT ZWEIFACHEM SEILEINLAUF**
ROPE TIGHTENER COMPRISING A DOUBLE ROPE FEED
TENDEUR A CABLE CARACTERISE PAR UNE DOUBLE ENTREE DU CABLE

(30) Priorität: 22.04.2004 DE 102004020225
(43) Veröffentlichungstag der Anmeldung: 03.01.2007
(73) Patentinhaber: AUTOLIV DEVELOPMENT AB, 447 83 Vargarda (SE)
(72) Erfinder: RUI, Thierry, F-76116 Saint Denis Le Thiboult (FR); DUTEIL, Regis, F-76440 Beaubec La Rosière (FR)
(74) Vertreter: Müller, Karl-Ernst
(86) Internationale Anmeldenummer: PCT/EP2005/004128
(87) Internationale Veröffentlichungsnummer: WO 2005/102795

(56) Entgegenhaltungen:
- EP-A- 0 685 372
- EP-B- 0 186 880
- DE-A1- 3 446 864
- US-B1- 6 238 003

## Beschreibung

Die Erfindung betrifft eine Straffvorrichtung für einen Sicherheitsgurt mit einem durch einen Umlenkblock geführten und an ein in einem an den Umlenkblock anschließenden Führungsrohr längs verschiebliches Antriebsteil angeschlossenen Zugseil als Träger eines Anschlussteils für den Sicherheitsgurt, wobei in dem Umlenkblock ein gebogener Kanal zur Umlenkung des Zugseils von seiner durch die fahrzeugseitige Lage des Anschlussteils vorgegebenen Verlaufsrichtung in die axiale Verlaufsrichtung des Führungsrohres ausgebildet ist, wobei in dem Einführbereich des Umlenkblocks für das Zugseil zwei in der Längsrichtung des Führungsrohres einander gegenüberliegende Führungsflächen angeordnet sind, wobei die eine Führungsfläche für die Umlenkung des Zugseils bei einer von dem Umlenkblock in Richtung des Führungsrohres beabstandeten Einbauposition wirksam ist und die andere, sich von dem Führungsrohr weg erstreckende Führungsfläche zur Fixierung des Anschlussteils für den Sicherheitsgurt in einer von dem Umlenkblock in der Verlaufsrichtung des Führungsrohres beabstandeten und zum Führungsrohr gegenüberliegend angeordneten Position derart angeordnet ist, daß sich in der Einbausituation der Straffvorrichtung mit Anschlussteil ein S-förmiger Verlauf des Zugseils innerhalb des Umlenkblocks ergibt.

Eine Straffvorrichtung mit den vorgenannten gattungsgemäßen Merkmalen ist in der DE 34 46 864 A1 beschrieben.

Der in dem Umlenkblock der bekannten Straffvorrichtung ausgebildete Kanal zur Durchleitung des Zugseils weist einen gebogenen Verlauf auf, der dem fahrzeugbedingten Maß der erforderlichen Umlenkung des Zugseiles zwischen der Richtung, in welcher das Zugseil aufgrund der festgelegten Lage des Anschlussteils für den Sicherheitsgurt im Fahrzeug in den Umlenkblock einläuft, und der Achsrichtung des an dem Umlenkblock anschließenden Führungsrohres entspricht. Der am Umlenkblock ausgebildete Einführbereich für das Zugseil ist trichterförmig mit zwei bezogen auf die Längsrichtung des Umlenkblocks einander gegenüber liegend angeordneten Führungsflächen ausgebildet. Die eine Führungsfläche ist für die Umlenkung des Zugseils bei einer von dem Umlenkblock in Richtung des Führungsrohres beabstandeten Einbauposition vorgesehen. Die andere, in der Längsrichtung des Führungsrohres gegenüberliegend angeordnete Führungsfläche sorgt für einen S-förmigen Verlauf des Zugseils innerhalb des Umlenkblocks, sofern die Straffvorrichtung mit Anschlussteil so eingebaut ist, daß sich das Anschlussteil für den Sicherheitsgurt in einer von dem Umlenkblock in der Verlaufsrichtung des Führungsrohres beabstandeten und zum Führungsrohr gegenüberliegend angeordneten Position befindet. Aufgrund dessen ist es bereits möglich, daß die Straffeinrichtung in dem Fahrzeug sowohl in einer Einbausituation mit einem in Fahrtrichtung des Fahrzeuges vorwärts eingebauten Führungsrohr (linksseitig) als auch in einer Einbausituation mit einem in Fahrtrichtung des Fahrzeuges rückwärtig abragenden Fahrzeugrohr (rechtsseitig) montierbar ist, ohne daß es einer konstruktiven Änderung bzw. Anpassung der Straffvorrichtung bedarf. In den beiden Einbausituationen werden lediglich die beiden unterschiedlichen, an dem Umlenkblock ausgebildeten Führungsflächen für den Einlauf des Zugseiles in den im Umlenkblock ausgebildeten Kanal genutzt.

Der Erfindung liegt die Aufgabe zugrunde, die Führung des Zugseils in den Umlenkblock bei unterschiedlichen Einbaupositionen der Straffvorrichtung noch zu verbessern.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht hierzu eine Straffvorrichtung mit den gattungsgemäßen Merkmalen vor, bei welcher ein nach der fahrzeugseitigen Montage des Umlenkblocks in den von den Führungsflächen eingeschlossenen Bereich einbringbarer Führungssteg zur Fixierung des Zugseilverlaufs vorgesehen ist. Hiermit ist der Vorteil verbunden, daß die Straffvorrichtung in einem Fahrzeug in den beiden möglichen Einbausituationen ohne konstruktive Änderung der Straffvorrichtung, jedoch mit einem fixierten Zugseilverlauf montierbar ist.

Nach einem Ausführungsbeispiel der Erfindung ist vorgesehen, daß der von den Führungsflächen eingeschlossene Winkel etwa 80° bis 100° beträgt.

Es kann vorgesehen sein, daß der Führungssteg an einer Abdeckung für den Umlenkblock vorgesehen ist.

Soweit bei Befestigung der Straffvorrichtung an einem fahrzeugfesten Teil über ein im Bereich des Umlenkblocks angebrachtes Befestigungsmittel die Auslösung des Gasgenerators mit der Bewegung des Antriebsteils für das Zugseil im Führungsrohr auf die Befestigung ein Drehmoment bewirkt, ist nach einem Ausführungsbeispiel der Erfindung vorgesehen, an dem Umlenkblock eine bei fahrzeugseitig montierter Straffvorrichtung in ein Fahrzeugteil eingreifende Verdrehsicherung ausgebildet ist. In einer zweckmäßigen Weise kann die die Verdrehsicherung aus einer an einer mit dem Umlenkblock zur verbindenden Abdeckung ausgebildeten abragenden Zunge bestehen.

In der Zeichnung ist ein Ausführungsbeispiel der Erfindung wiedergegeben, welches nachstehend beschrieben ist. Es zeigen:
- Fig. 1: eine Straffvorrichtung für ein Sicherheitsgurtschloss in einer perspektivischen Ansicht,
- Fig. 2: den Umlenkblock der Straffvorrichtung gemäß Figur 1 in einer teilweise geschnittenen Einzeldarstellung.

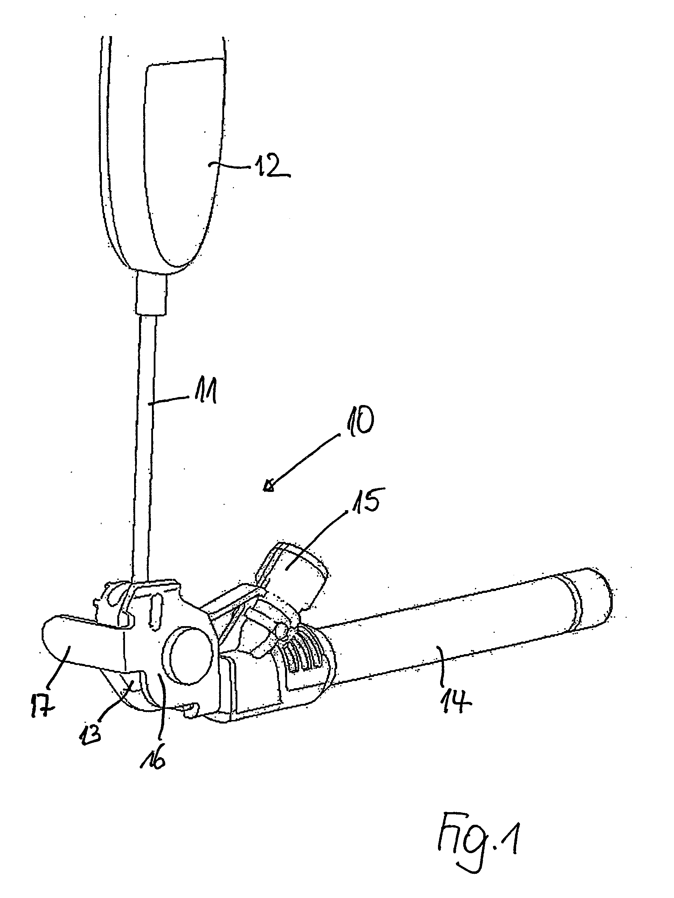

Die in Figur 1 dargestellte Straffvorrichtung 10 dient zur Straffung eines Gurtschlosses 12, welches am Ende eines Zugseiles 11 als Anschlussteil für einen Sicherheitsgurt befestigt ist. Das Zugseil 11 erstreckt sich einschließlich seiner erforderlichen Umlenkung durch einen Umlenkblock 13, an den ein Führungsrohr 14 anschließt. Das Führungsrohr 14 weist eine Gasgeneratoraufnahme 15 auf. Wie im Stand der Technik bekannt, ist das Zugseil 11 an einen im Führungsrohr 14 unter der Wirkung des von dem in der Gasgeneratoraufnahme 15 befindlichen Gasgenerator freigesetzten Gases beweglicher Kolben als Antriebsteil angeschlossen, so dass bei einer Bewegung des Kolbens in dem Führungsrohr nach rechts (Figur 1) das Antriebsseil 11 in den Umlenkblock 13 eingezogen und dadurch der Abstand zwischen dem Gurtschloss 12 und dem Umlenkblock 13 verkürzt wird. Hiermit wird die gewünschte Straffbewegung für den im Anlegezustand des Sicherheitsgurtsystems an das Gurtschloss 12 angeschlossenen Sicherheitsgurt ausgeführt. Um bei Auslösung des Gasgenerators und der Bewegung des Antriebsteiles in dem Führungsrohr 14 bezüglich der Befestigung der Straffvorrichtung 10 im Bereich des Umlenkblocks 13 auftretenden Drehmomente zu neutralisieren, ist an dem Umlenkblock 13 eine Abdeckung 16 mit einer davon abragenden Zunge 17 als Verdrehsicherung ausgebildet, wobei die Zunge 17 bei fahrzeugseitig montierter Straffvorrichtung 10 in geeigneter Weise in ein fahrzeugfestes Teil eingreift und dadurch eine verdrehgesicherte Befestigung der Straffvorrichtung 10 an einem nicht dargestellten Fahrzeugteil verwirklicht.

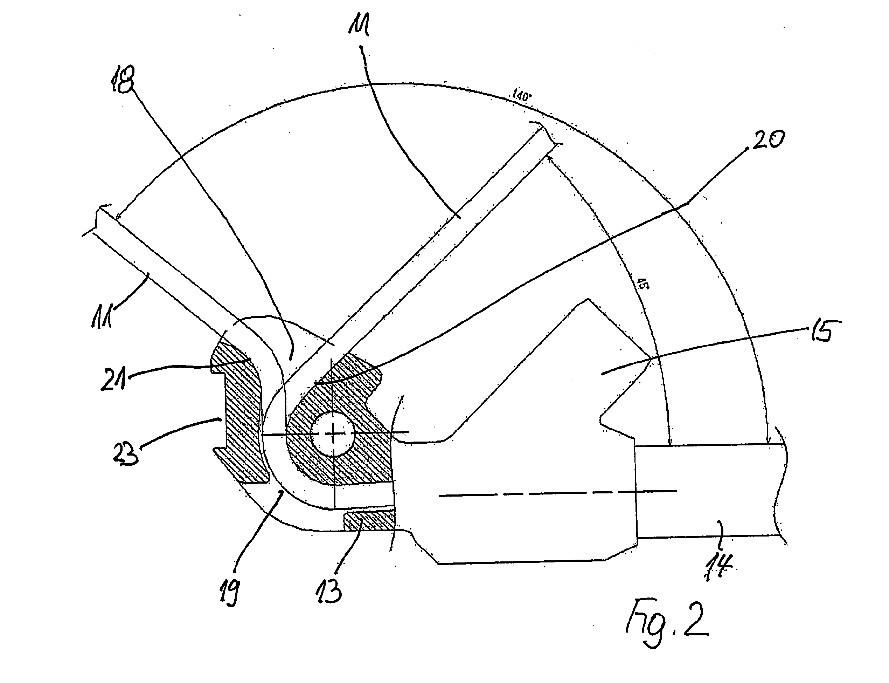

Wie sich aus Figur 2 ergibt, öffnet sich der in dem Umlenkblock 13 ausgebildete Kanal 19 zur umlenkenden Durchführung des Zugseils 11 in einen Einführbereich 18 für das Zugseil, wobei in der Längsrichtung des Führungsrohres 14 einander gegenüberliegende Führungsflächen 20 und 21 für das Zugseil ausgebildet sind. Dabei ist die in Richtung des Anschlusses des Führungsrohres 14 verlaufende erste Führungsfläche 20 derart angeordnet, dass das über diese Führungsfläche 20 geführte Zugseil 11 mit der Längsachse des Führungsrohres 14 einen Winkel von etwa 45 Grad einschließt.

Die in der Längsrichtung des Führungsrohres 14 der ersten Führungsfläche 20 gegenüberliegend angeordnete zweite Führungsfläche 21 ist mit einem derartigen Verlauf angeordnet, dass das über die zweite Führungsfläche 21 geführte Zugseil 11 mit dem Führungsrohr 14 einen Winkel von 140 Grad bildet. Somit schließen die beiden Führungsflächen 20, 21 bei dem vorliegenden Ausführungsbeispiel einen Winkel von 95 Grad miteinander ein. Dieser Winkel kann den Einbauverhältnissen in einem Kraftfahrzeug und damit den unterschiedlichen Verlaufsrichtungen des Zugseils 11 zum Umlenkblock 13 angepasst sein. Wird in einer entsprechenden Einbausituation der Straffvorrichtung 10 die zweite Führungsfläche 21 zur Einführung des Zugseils 11 in den Umlenkblock 13 benutzt, so ergibt sich eine etwa S-förmige Umlenkung des Zugseils 11 in dem Umlenkblock 13.

An seinem dem Führungsrohr 14 gegenüberliegenden Bereich ist der Umlenkblock 13 mit einer nutartigen Ausnehmung 23 zur Aufnahme der Zunge 17 (Figur 1) versehen, so dass über die formschlüssige Verbindung zwischen der Zunge 17 und dem Umlenkblock 13 die verdrehsicherte Befestigung verwirklicht ist.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Straffvorrichtung für einen Sicherheitsgurt mit einem durch einen Umlenkblock (13) geführten und an ein in einem an den Umlenkblock (13) anschließenden Führungsrohr (14) längs verschiebliches Antriebsteil angeschlossenen Zugseil (11) als Träger eines Anschlussteils (12) für den Sicherheitsgurt, wobei in dem Umlenkblock (13) ein gebogener Kanal (19) zur Umlenkung des Zugseils (11) von seiner durch die fahrzeugseitige Lage des Anschlussteils (12) vorgegebenen Verlaufsrichtung in die axiale Verlaufsrichtung des Führungsrohres (14) ausgebildet ist, wobei in dem Einführbereich (18) des Umlenkblocks (13) für das Zugseil (11) zwei in der Längsrichtung des Führungsrohres (14) einander gegenüberliegende Führungsflächen (20, 21) angeordnet sind, wobei die eine Führungsfläche (20) für die Umlenkung des Zugseils (11) bei einer von dem Umlenkblock (13) in Richtung des Führungsrohres (14) beabstandeten Einbauposition wirksam ist und die andere, sich von dem Führungsrohr (14) weg erstreckende Führungsfläche (21) zur Fixierung des Anschlussteils (12) für den Sicherheitsgurt in einer von dem Umlenkblock (13) in der Verlaufsrichtung des Führungsrohres (14) beabstandeten und zum Führungsrohr (14) gegenüberliegend angeordneten Position derart angeordnet ist, daß sich in der Einbausituation der Straffvorrichtung mit Anschlussteil (12) ein S-förmiger Verlauf des Zugseils (11) innerhalb des Umlenkblocks (13) ergibt, **dadurch gekennzeichnet, dass** ein nach der fahrzeugseitigen Montage des Umlenkblocks (13) in den von den Führungsflächen (20, 21) eingeschlossenen Bereich einbringbarer Führungssteg zur Fixierung des Zugseilverlaufs vorgesehen ist.

2. Straffvorrichtung nach Anspruch 1, **dadurch gekennzeichnet, dass** der von den Führungsflächen eingeschlossene Winkel 80 bis 100 Grad beträgt.

3. Straffvorrichtung nach Anspruch 1, **dadurch gekennzeichnet, dass** der Führungssteg an einer Abdeckung für den Umlenkblock (13) ausgebildet ist.

4. Straffvorrichtung nach einem der Ansprüche 1 bis 3, **dadurch gekennzeichnet, dass** an dem Umlenkblock (13) eine bei fahrzeugseitig montierter Straffvorrichtung (10) in ein Fahrzeugteil eingreifende Verdrehsicherung (17) ausgebildet ist.

5. Straffvorrichtung nach Anspruch 4, **dadurch gekennzeichnet, dass** die Verdrehsicherung aus einer an einer mit dem Umlenkblock (13) zur verbindenden Abdeckung (16) ausgebildeten abragenden Zunge (17) besteht.

## Claims

1. A tensioning device for a safety belt having a traction cable (11), which is guided through a deflection block (13) and is connected to a drive part longitudinally displaceable in a guide pipe (14) adjoining the deflection block (13), as a carrier of a connection part (12) for the safety belt, a curved channel (19) being implemented in the deflection block (13) for deflecting the traction cable (11) from its run direction predefined by the vehicle-side position of the connection part (12) into the axial run direction of the guide pipe (14), whereby in the insertion area (18) of the deflection block (13) two guide faces (20, 21) are situated opposite to each other in the longitudinal direction of the guide pipe (14), whereby one guide face (20) is effective for the deflection of the traction cable (11) in an installation position at a distance from the deflection block (13) in the direction of the guide pipe (14) and for fixation of the connection part (12) for the safety belt the other guide face (21) extending away from the guide pipe (14) is positioned in a position which is situated at a distance from the deflection block (13) in the run direction of the guide pipe (14) and diametrically opposite the guide pipe (14) in such a way, that in the installation situation of the tensioning device with the connection part (12), an S-shaped course of the traction cable (11) inside the deflection block (13) results, **characterized in that** a guide web which may be introduced into in the area enclosed by the guide faces (20, 21) after the vehicle-side mounting of the deflection block (13) is provided for fixing the traction cable course.

2. The tensioning device according to claim 1, **characterized in that** the angle enclosed by the guide faces is 80 to 100°.

3. The tensioning device according to claim 1, **characterized in that** the guide web is implemented on a cover for the deflection block (13).

4. The tensioning device according to one of claims 1 - 3, **characterized in that** a twist lock (17) which engages in a vehicle part when the tensioning device (10) is mounted on the vehicle is implemented on the deflection block (13).

5. The tensioning device according to claim 4,
**characterized in that** the twist lock comprises a tongue (17) implemented on a cover (16) to be connected to the deflection block (13).

## Revendications

1. Dispositif tendeur pour une ceinture de sécurité avec un câble de traction (11), guidé par un bloc de déviation (13) et raccordé à un élément d'entraînement déplaçable longitudinalement dans un tube de guidage (14) raccordé au bloc de déviation (13), comme support d'un élément de raccordement (12) pour la ceinture de sécurité, un canal incurvé (19) étant réalisé dans le bloc de déviation (13) pour dévier le câble de traction (11) de sa direction d'extension prédéfinie par la position côté véhicule de l'élément de raccordement (12) à la direction d'extension axiale du tube de guidage (14), deux surfaces de guidage (20, 21) se faisant face dans le sens longitudinal du tube de guidage (14) étant agencées dans la zone d'introduction (18) du bloc de déviation (13) pour le câble de traction (11), une des surfaces de guidage (20) étant active pour la déviation du câble de traction (11) dans le cas d'une position de montage distante du bloc de déviation (13) en direction du tube de guidage (14) et l'autre surface de guidage (21) s'éloignant du tube de guidage (14) étant agencée pour fixer l'élément de raccordement (12) pour la ceinture de sécurité dans une position distante du bloc de déviation (13) dans la direction d'extension du tube de guidage (14) et agencée en face du tube de guidage (14) de sorte à obtenir dans la situation de montage du dispositif tendeur avec élément de raccordement (12), une allure en forme de S du câble de traction (11) à l'intérieur du bloc de déviation (13), **caractérisé en ce qu'**un appendice de guidage pouvant être introduit après le montage côté véhicule du bloc de déviation (13) dans la zone formée par les surfaces de guidage (20, 21) est prévu pour fixer l'allure du câble de traction.

2. Dispositif tendeur selon la revendication 1, **caractérisé en ce que** l'angle formé par les surfaces de guidage est de 80 à 100 degrés.

3. Dispositif tendeur selon la revendication 1, **caractérisé en ce que** l'appendice de guidage est réalisé au niveau d'un recouvrement pour le bloc de déviation (13).

4. Dispositif tendeur selon l'une quelconque des revendications 1 à 3, **caractérisé en ce qu'**un blocage contre la torsion (17) prenant dans un élément du véhicule lorsque le dispositif tendeur (10) est monté côté véhicule est réalisé au niveau du bloc de déviation (13).

5. Dispositif tendeur selon la revendication 4, **caractérisé en ce que** le blocage contre la torsion (17) se compose d'une languette en saillie réalisée au niveau d'un recouvrement (16) à relier au bloc de déviation (13).
